# EUROPEAN PATENT APPLICATION

(11) **EP 4 042 907 A1**
(43) Date of publication of application: **17.08.2022**
(21) Application number: 21157147.6
(22) Date of filing: 15.02.2021
(51) Int. Cl.: A47G 19/22, B65D 25/54, G01F 19/00, B65D 3/28

(54) **IMPROVEMENTS IN DRINKING VESSELS**

(71) Applicant: Ward, Martin, London NW10 5DL (GB)
(72) Inventor: Ward, Martin, London NW10 5DL (GB)
(74) Representative: London IP Ltd

(57) **Abstract**

A drinking vessel has an upper opening defined by a rim, a base and at least one substantially opaque sidewall extending therebetween. The vessel comprises an aperture in the sidewall, the aperture being positioned adjacent the rim, a see-through cover affixed over the aperture.

## Description

The present invention relates to improvements in drinking vessels. In particular the present application relates to improvements in disposable drinking vessels of the type used in commercial venues.

In accordance with legislation the sale of poured alcoholic beverages must occur in vessels comprising means to measure the quantity of beverage provided. In order to provide a guide as to the quantity vessels are often stamped with a measuring line.

Vessels used and serve draught beer and cider can be use the brim of the vessel to provide a measurement. Such vessels must be filled to the brim to dispense the quantity being purchased.

This leads to undesirable spillages and waste as the beverage may readily overflow the brim of the vessel, particularly during transportation from a bar to a place of consumption.

Furthermore, such vessels are incapable of appropriately containing a beverage intended to have a frothy head, for example stout and other ales.

As an alternative to using the brim of a vessel as a measure of quantity some vessels are stamped with at least one measurement line. In order for such vessels to be effective the line must be visible from the outside of the vessel and as such stamped vessels are transparent, being formed of glass or plastic.

At large events the use of stamped plastic glasses can result in large amounts of plastic waste that is detrimental to the environment.

The present invention seeks to improve upon the prior art.

According to the present invention there is provided a drinking vessel having an upper opening defined by a rim, a base and at least one substantially opaque sidewall extending therebetween, the vessel comprising:
an aperture in the sidewall, the aperture being positioned adjacent the rim;
at least one see-through cover affixed over the aperture.

In some embodiments an upper or lower limit of the aperture acts to measure a quantity of liquid.

In some embodiments an upper edge or lower limit of an aperture is positioned such that the vessel contains 95% of 2 pints, or a pint, or a half-pint, or a litre, or a half litre below that limit.

In some embodiments the vessel comprises one or more measurement markings at the aperture.

Preferably markings are printed on the sidewall.

Beneficially by printing measurement indicia on the sidewall the accuracy of the measurement displayed will not be affected by the positioning of the cover during manufacture of the drinking vessel.

This is in contrast to an embodiment where measurement markings are printed on the see-through cover as any error in its positioning during manufacture will lead to an error in the measurement displayed.

In some embodiments the markings comprise at least one line adjacent the aperture.

In some embodiments the markings comprise a line adjacent each side of the aperture.

In some embodiments the aperture adjacent the rim is confined to an upper two thirds of the vessel, or is confined to an upper half of the vessel, or is confined to an upper third of the vessel, or is confined to an upper quarter of the vessel, or is confined to an upper fifth of the vessel, or is confined to the upper 15% of the vessel, or is confined to the upper 10% of the vessel.

Beneficially by limiting the size of the aperture to only an uppermost area the amount of transparent material required to manufacture a vessel is reduced. This is most desirable if only a single quantity needs to be measured by the vessel.

In some embodiments a see-through cover is affixed to a sidewall by means of adhesive.

In some embodiments a see-through cover is affixed to a sidewall by means of welding.

Any suitable means of welding such as ultrasonic welding or heat welding may be employed.

Advantageously, by welding a see-through cover to a sidewall no adhesive that may contaminate a beverage need be used, and a single cover affixed to either an outside surface or an inside surface of the side wall.

In some embodiments a see-through cover is affixed to only an outside surface of the sidewall.

Advantageously affixing a cover to only the outside surface of the sidewall reduces the risk that the cover might detach from the sidewall, enter a beverage in the vessel and become a choking hazard.

This may be of particular benefit in an instance where a bond between the covering and the side wall is relatively weak and/or is susceptible to being weakened by a beverage.

In some embodiments a see-through cover is affixed to only an inside surface of the sidewall.

This may be of particular benefit in an instance where a bond between the covering and the sidewall is relatively strong, and a covering is very unlikely to detach from the sidewall such that it is a choking hazard.

This is because by attaching the cover to an inside surface the comfort of a user drinking from the vessel is not reduced by the cover scratching on a user's lip.

In some embodiments a first see-through cover is affixed to an outside surface of the sidewall and a second see-through cover is affixed to an inside surface of the sidewall.

By providing see-through covers at both sides of the aperture the see-through covers may be attached to the sidewall by means of adhesive without the risk of adhesive contamination a beverage.

Preferably when the vessel is in an unused state the vessel does not comprise an opaque cover that overlays the see-through cover.

Advantageously if the aperture is see-through to a user when the vessel is in an unused state (i.e. the aperture does not have any kind of opaque cover that must be removed to reveal the see-through cover and aperture) the vessel may be rapidly used a member of staff at a commercial premises.

In some embodiments the vessel comprises a plurality of apertures with respective covers.

In some embodiments the vessel comprises a plurality of apertures at substantially the same level.

In order that the present invention may be more fully understood a specific embodiment will now be described by way of example with reference to the accompanying schematic drawings, of which:
Figure 1 is a view of a vessel made in accordance with a first embodiment of the present invention;
Figure 2 is view of the vessel of figure 1 without a see-through cover applied to the aperture;
Figure 3 is a view of the see-through cover of the vessel of Figure 1;
Figure 4 is a view of the sidewall of the vessel of Figure 1 laid flat;
Figure 5 is a view of a vessel made in accordance with a second embodiment of the present invention;
Figure 6 is a view of a vessel made in accordance with a third embodiment of the present invention; and
Figure 7 is a view of a vessel made in accordance with fourth embodiment of the present invention.

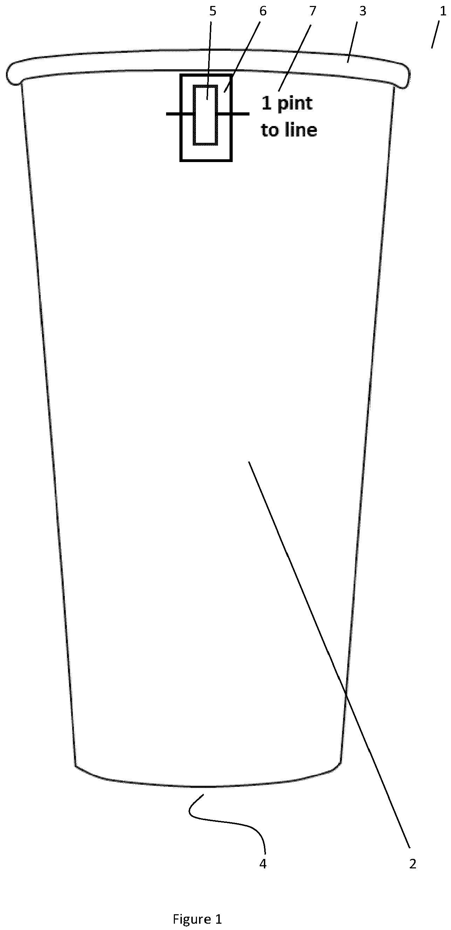

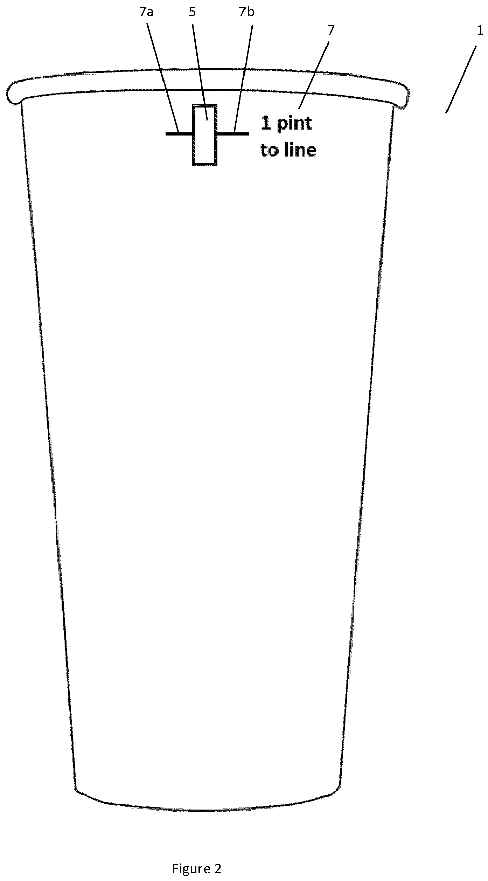

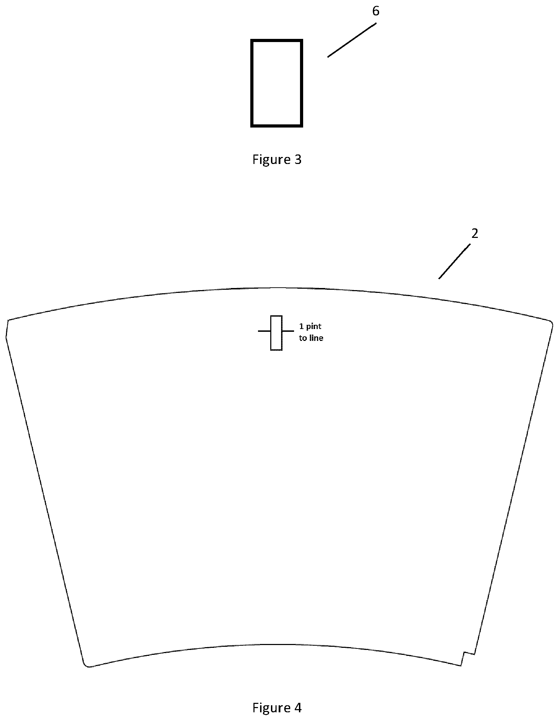

Referring to Figures 1 to 3, a drinking vessel 1 comprises a substantially frustoconical sidewall 2 that extends between an uppermost rim 3 and a lower base 4.

Rim 3 defines an upper opening from which a user may imbibe the contents of drinking vessel 1.

Sidewall 2, rim 3 and base 4 are formed of a paper material.

Adjacent rim 3 and formed in sidewall 2 of vessel 1 is aperture 5. Aperture 5 is substantially rectangular and provides a viewing window for a user of vessel 1 such that a user may see the contents of vessel 1.

Aperture 5 is confined to approximately the uppermost 13% of vessel 1 (when considered in respect of the distance between base 2 and rim 3.

Substantially rectangular see-through cover 6 is affixed to the outer surface of sidewall 2 over aperture 5 such that the liquid contents of vessel 1 may not exit vessel 1 via aperture 5.

Cover 6 is formed of a substantially transparent plastics material and is of the same shape but slightly larger dimensions than aperture 5 such that its periphery may be affixed to the outer surface of sidewall 2.

Printed on the outer surface of sidewall 2 adjacent aperture 5 are measurement markings 7 that in the present embodiment comprise the wording '1 pint to line' and lines 7a, 7b either side of aperture 5.

Lines 7a, 7b are located approximately 1cm from rim 3. In most embodiments it is considered that an uppermost measurement line will be located around 1cm from a rim of a vessel, preferably no more than 1.5cm from a rim of a vessel and preferably no more than 2cm from a rim of a vessel.

In use a person vending a pint of beverage may fill vessel 1 to the line formed by lines 7a, 7b, viewing the contents of vessel 1 through aperture 5.

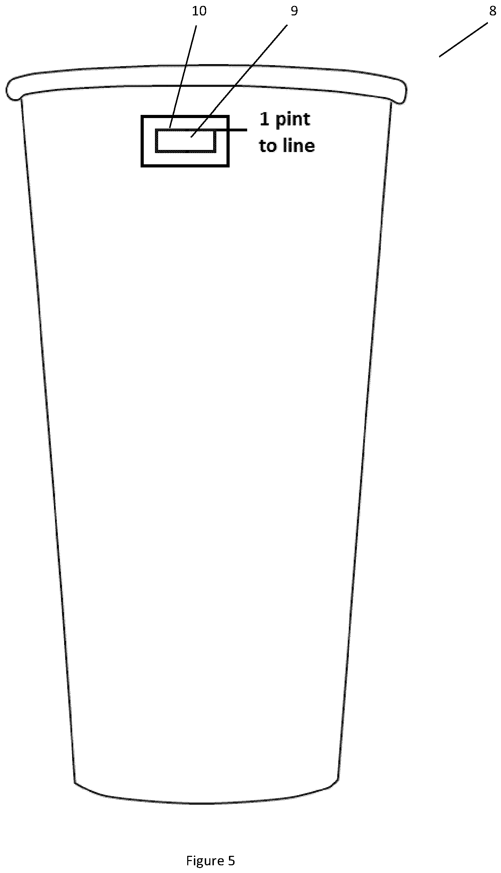

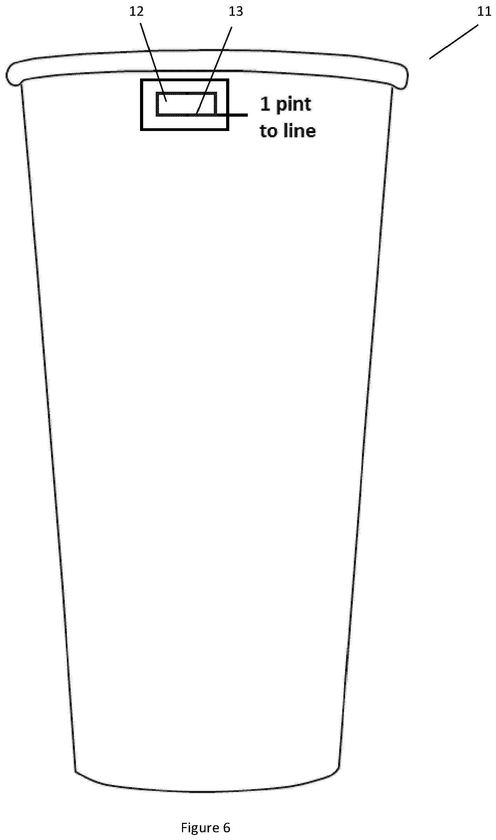

In second and third embodiments of the present invention as illustrated in Figures 5 and 6 an upper or lower edge of an aperture may serve as a measuring line.

As illustrated in Figure 5 a vessel 8, may comprise an aperture 9 that measures a quantity of liquid within vessel 8 by the position of an upper edge 10 of aperture 9.

Similarly, and as illustrated in Figure 6 a vessel 11, may comprises an aperture 12 that measures a quantity of liquid within vessel 11 by the position of a lower edge 13 of aperture 12.

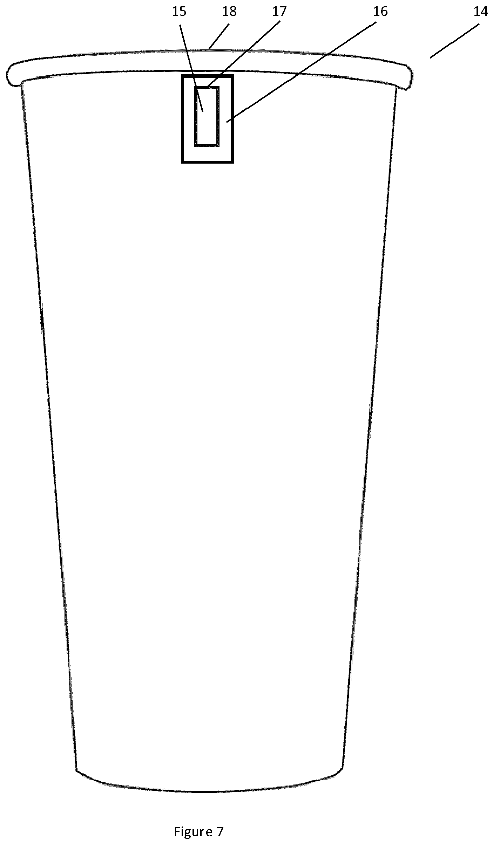

Turning to Figure 7 and a fourth embodiment of the present invention, a drinking vessel 14 comprises an aperture 15 and a cover 16. However vessel 14 does not comprise any particular measurement marking at aperture 15.

Instead drinking vessel 14 is a 'pint to brim' vessel that contains a full pint of liquid when full to the rim 18.

The lower edge 17 of aperture 15 is positioned such that when vessel 14 is full up to upper edge 17 it is 95% full.

Under current UK law a pint of alcoholic beverage having a frothy head may be legally served provided that at least 95% of a pint is served as liquid.

Thus the provision of aperture 15 and cover 16 allows a user to determine if a pint has been legally served by ensuring that the liquid level is at or above upper edge 17 of aperture 15.

In other embodiments (for example in other jurisdictions or in the event that UK law changes) it may be desirable to measure other predetermined percentages of a volume of liquid.

In the present embodiments the aperture is substantially rectangular, but in other embodiment any suitable shape might be employed, such as a circle, triangle, polygon, star or other shape.

Thus, whilst in the fourth embodiment it is upper edge 17 that is used to measure a volume of liquid in other embodiments such a linear edge might not exist. For example in other embodiments an aperture may reach its uppermost or lowermost limit at a vertex.

Whilst in the present embodiments the drinking vessels illustrated are configured to measure a pint other sizes of vessel may of course be manufactured.

For example, vessels configured to measure any of the following measurements may be provided: half pint to line, 1/3 pint to line, 2/3 pint to line, pint to line, 2 pints to line, 100ml to line, 250ml to line, 500ml to line, 1 litre to line, 25ml to line, 35ml to line, 35.5ml to line, 50ml to line, 70ml to line, 71ml to line, 125ml to line, 175ml to line, 250ml to line, 20ml to line, 30ml to line, 40ml to line, 18cl to line, 20cl to line, 22cl to line, 25cl to line, 30cl to line, 33cl to line, 40cl to line, 50cl to line. Similarly any of the above-listed measures may be to the brim of a vessel.

Whilst in the present embodiment measurement markings are printed on the vessel in other embodiments markings may be provided by other means, for example by one or more scores or embossed features

Vessels may be made from any suitable material, for example they may be made from board of pulpable materials including wood, sugarcane bagasse, bamboo, cotton, grass, hemp.

Vessels may be unlined or lined for waterproofing, for example with a polyethylene, a polylactic acid/polylactide, a polypropylene, dispersion lining / aqueous lining, cellulose compound, wax, latex, BioPBS, plant or water-based lining.

In some embodiments a vessel may be configured to measure only a single quantity of liquid. For example, a pint-sized vessel may have a single aperture that may be used to measure a pint, and a half-pint-sized vessel may have a single aperture that may be used to measure a half-pint.

In many embodiments a vessel comprise will comprise a single aperture for ease of manufacture. However, in some embodiments the vessel may comprise a plurality of apertures with respective covers.

Providing a plurality of apertures with respective covers can provide multiple benefits.

If a plurality of apertures are provided at the same level on a vessel (i.e. to measure the same volume of liquid) a user of the vessel may more readily view the volume of liquid in the vessel without having to significantly rotate the vessel to locate a measuring aperture. This is of benefit in a bar environment where the speed at which drinks are served is critical.

To achieve this aim, and by way of example, two apertures may be provided, positioned diametrically opposite such that the level of beverage in the vessel may be viewed from two sides of the vessel.

In other embodiments 3, 4 or even more apertures may be provided. It is envisaged that where multiple apertures are provided to measure the same volume they may be substantially evenly spaced around a circumference of the vessel.

Thus, for example where two apertures are provided they will be separated by 180 degrees, where three apertures are provided they will be separated by 120 degrees and where four apertures are provided they will be separated by 90 degrees.

A plurality of apertures may also be provided at different levels on a vessel (i.e. such that they measure different volumes of liquid). Such embodiments are advantageous as vessel may therefore be used to serve different measures of beverage, for example both pints and half-pints.

In some embodiments an aperture may be elongate and extends towards the base of the vessel and the vessel comprises markings positioned to measure a plurality of quantities of liquid.

In this specification an apparatus/method/product "comprising" certain features is intended to be interpreted as meaning that it includes those features, but that it does not exclude the presence of other features.

Many variations are possible without departing from the scope of the present invention as defined in the appended claims.

## Claims

1. A drinking vessel having an upper opening defined by a rim, a base and at least one substantially opaque sidewall extending therebetween, the vessel comprising:
an aperture in the sidewall, the aperture being positioned adjacent the rim;
at least one see-through cover affixed over the aperture.

2. The vessel of claim 1 wherein an upper or lower limit of the aperture acts to measure a quantity of liquid.

3. The vessel of claim 2 wherein an upper edge or lower limit of an aperture is positioned such that the vessel contains 95% of 2 pints, or a pint, or a half-pint, or a litre, or a half litre below that limit.

4. The vessel of any preceding claim comprising one or more measurement markings at the aperture.

5. The vessel of claim 4 wherein markings are printed on the sidewall.

6. The vessel of claim 4 or 5 wherein the markings comprise at least one line adjacent the aperture or comprise a line adjacent each side of the aperture.

7. The vessel of any preceding claim wherein the aperture adjacent the rim is confined to an upper two thirds of the vessel, or is confined to an upper half of the vessel, or is confined to an upper third of the vessel, or is confined to an upper quarter of the vessel, or is confined to an upper fifth of the vessel, or is confined to the upper 15% of the vessel, or is confined to the upper 10% of the vessel.

8. The vessel of any preceding claim wherein a see-through cover is affixed to a sidewall by means of adhesive.

9. The vessel of any of claims 1 to 8 wherein a see-through cover is affixed to a sidewall by means of welding.

10. The vessel of any preceding claim wherein a see-through cover is affixed to only an outside surface of the sidewall.

11. The vessel of any of claims 1 to 10 wherein a see-through cover is affixed to only an inside surface of the sidewall.

12. The vessel of any of claims 1 to 10 wherein a first see-through cover is affixed to an outside surface of the sidewall and a second see-through cover is affixed to an inside surface of the sidewall.

13. The vessel of any preceding claim wherein when the vessel is in an unused state the vessel does not comprise an opaque cover that overlays the see-through cover.

14. The vessel of any preceding claim comprising a plurality of apertures with respective covers.

15. The vessel of claim 14 comprising a plurality of apertures at substantially the same level.
